(19) Europäisches Patentamt
European Patent Office
Office européen des brevets

(11) Veröffentlichungsnummer: **0 348 724 B1**

(12) # EUROPÄISCHE PATENTSCHRIFT

(45) Veröffentlichungstag der Patentschrift: **03.07.91 Patentblatt 91/27**

(51) Int. Cl.$^5$: **C10M 107/50,** C08G 77/24, // C10N40:00

(21) Anmeldenummer: **89110653.6**

(22) Anmeldetag: **13.06.89**

(54) **Tieftemperaturschmieröl.**

(30) Priorität: **25.06.88 DE 3821568**

(43) Veröffentlichungstag der Anmeldung: **03.01.90 Patentblatt 90/01**

(45) Bekanntmachung des Hinweises auf die Patenterteilung: **03.07.91 Patentblatt 91/27**

(84) Benannte Vertragsstaaten: **AT BE DE FR GB IT NL**

(56) Entgegenhaltungen:
**EP-A- 0 249 960**
**EP-A- 0 284 871**
**DE-A- 1 769 094**

(56) Entgegenhaltungen:
**FR-A- 1 479 161**
**GB-A- 2 019 427**
**GB-A- 2 086 922**
**US-A- 3 503 926**

(73) Patentinhaber: **BAYER AG**
**W-5090 Leverkusen 1 Bayerwerk (DE)**

(72) Erfinder: **Steinbach, Hans-Horst, Dr.**
**Weyerstrasse 4**
**W-5253 Lindlar (DE)**
Erfinder: **Ackermann, Jürgen, Dr.**
**Starenweg 17**
**W-5060 Bergisch Gladbach 2 (DE)**
Erfinder: **Schlak, Ottfried, Dr.**
**Kalkweg I2**
**W-5000 Köln 80 (DE)**

**EP 0 348 724 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die vorliegende Erfindung betrifft ein Tieftemperaturschmieröl auf Basis von Fluorsiloxanen.

Die industrielle Kälteerzeugung im Tieftemperaturgebiet von ca. –110°C hat sich in den vergangenen Jahren stark ausgeweitet. Ein beträchtlicher Anteil entfällt hierbei auf Laboreinrichtungen, Kryostate und Prüfkammern für Werkstoffuntersuchungen im Tieftemperaturbereich. Aber auch in der Medizin, Chemie und Verfahrenstechnik sowie bei der Stahlvergütung werden Kälteanlagen für den erwähnten Temperaturbereich in zunehmendem Umfang und auch für größere Leistungen benötigt.

Als Schmiermittel in Kälteanlagen dienten lange Zeit einfache Mineralöle oder normale naphthenische Öle, die jedoch in vieler Hinsicht (keine extreme Temperaturbelastbarkeit, stark wechselnde Viskosität) nicht befriedigen konnten.

Halbsynthetische Öle, vollsynthetische Alkylaromaten, Poly-α-olefine brachten weitere Verbesserungen. Synthetische Flüssigschmiermittel auf chemischer Basis, die sich vom Mineralöl entfernten, z.B. Butylester von Polykieselsäuren, waren die konsequente Folge dieser Entwicklung. Derartige Flüssigkeitsschmiermittel zeigen jedoch eine gewisse Hydrolyseempfindlichkeit, die bei Wasserzutritt zum Gelieren des Schmiermittels führen kann.

Organopolysiloxane als Schmiermittel zu verwenden, wäre ein Ausweg, um die Hydrolyseempfindlichkeit zu umgehen. Es ist aber allgemein bekannt, daß z.B. Dimethylpolysiloxane an sich schlechte Schmiermittel darstellen, obwohl ihr Viskositätstemperaturverhalten Vorteile für ein Flüssigschmiermittel in Tieftemperaturanlagen bieten könnte.

Phenyl-, Halophenyl- und Trifluorpropyl-substituierte Siloxane zeigen zwar gute Schmiereigenschaften, aber gegenüber Dimethylpolysiloxanen ein schlechtes Viskositätstemperaturverhalten (vgl. J. of Chem. and Engng. Data 6 (1961), 155). Solche Siloxane fanden zwar Verwendung bei der Herstellung von Hochtemperatur-Schmierfetten, aber nicht als Tieftemperatur-Schmiermittel.

Aus der US-PS 3 642 626 sind ebenfalls Schmiermittel bekannt, die in einem sehr weiten Temperaturbereich beständig sind. Dabei handelt es sich um polymere Fluorsilicone mit relativ hohen Polymerisationsgraden, die wegen der hohen Viskosität bei niedrigen Temperaturen als Tieftemperatur-Schmiermittel keine Verbesserung bringen ; zudem ist ihre Herstellung kompliziert und aufwendig.

Um diesem Problem zu entgehen, wurde in der DE-OS 27 50 980 ein fluorhaltiges Siloxan der allgemeinen Formel

$$R_FR_2SiOSiR_2R_F$$

vorgeschlagen, bei dem
$R_F$ den Rest $C_nF_{2n+1}-CH_2-CH_2-$ (n = 1 – 12) bedeutet.

Dieses Öl kann allein oder gegebenenfalls im Gemisch mit an sich bekannten Schmiermitteln eingesetzt werden.

Bei der technischen Erprobung dieser Substanz hat sich gezeigt, daß dieses Öl sowohl zur Herstellung von Tieftemperatur-Schmiermitteln als auch zur Herstellung von Fetten gemäß DE-OS 1 769 094 Vorteile aufweist. Dieses Tieftemperatur-Schmiermittel hat aber eine niedrige Ausgangsviskosität, die es für manche Anwendungen ungeeignet macht. Es hat sich nämlich gezeigt, daß Schmieröle benötigt werden, die bevorzugt in der Viskositätsklasse ISO VG 46 vorliegen müssen. Das heißt, daß sie kinematische Viskositäten zwischen 41,4 bis 50,6 mm²/sec bei 40°C aufweisen.

Gegenstand der vorliegenden Erfindung ist nun ein Schmiermittel auf Basis von Fluorsiloxanen, dadurch gekennzeichnet, daß sie aus Verbindungen der allgemeinen Formel

$$T_a\, M_b\, D^F_c\, D_d$$

bestehen, wobei

- T für Phenyltrisiloxygruppen, gegebenenfalls im Gemisch mit Alkyltrisiloxygruppen,
- M für Trialkylmonosiloxygruppen und/oder Triphenylmonosiloxygruppen, insbesondere Trimethylsiloxygruppen,
- D für Dialkyldisiloxygruppen und/oder Diphenyl- und/oder Methylphenyldisiloxygruppen, insbesondere Dimethyldisiloxygruppen, und
- $D^F$ für Alkyl- oder Aryl-disiloxygruppen, insbesondere Methyl- oder Phenyl-disiloxygruppen mit einem fluorierten Rest $C_nF_{2n+1}-CH_2-CH_2-$ (n = 1 – 12) stehen und

wobei a Werte von 0-5,
b Werte von 3-7,
c Werte von 3-7 und
d Werte von 30-70

annehmen kann.

Es hat sich herausgestellt, daß Verbindungen der allgemeinen Formel

$$T_a M_b D^F{}_c D_d$$

in dem T eine

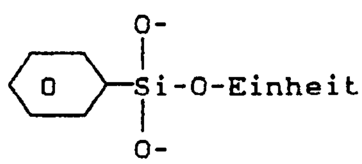

$M =$ 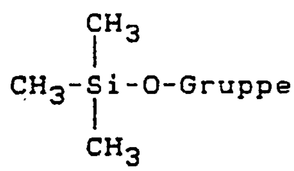 oder 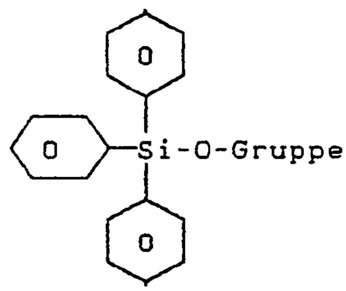

oder eine Siloxygruppe an der sowohl Methyl- als auch Phenylreste gebunden sind

$D =$ 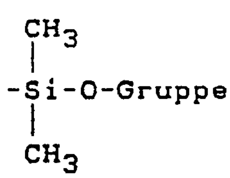 oder 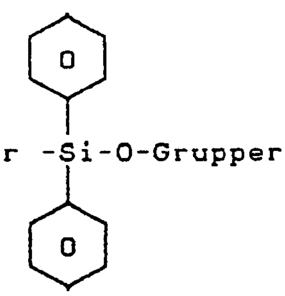 oder 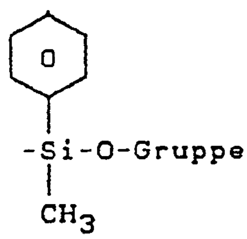

$D^F =$ 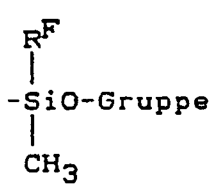 oder 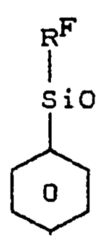 ist,

ganz besondere Vorteile bietet, wenn

a vorzugsweise etwa 3,
b vorzugsweise etwa 5,
c vorzugsweise etwa 5 und
d vorzugsweise etwa 50 beträgt.

Es handelt sich dabei um ein lineares oder leicht verzweigtes Siliconöl mit allen Vorteilen der Silicone, als da sind hohe Temperaturbeständigkeit, geringe Viskositätsabhängigkeit von der Temperatur, physiologische Unbedenklichkeit. Dieses Öl hat aufgrund der $R^F$-Gruppen, bei denen es sich um $-CH_2\text{-}CH_2C_nF_{2n+1}$ handeln kann und bei denen n Werte zwischen 1 und 12, in Einzelfällen auch darüber, annehmen, hervorragende Löslichkeit in Kältemitteln (z. B. in R 12, R 13, R 502 oder R 503).

So konnte bei diesen Kältemitteln selbst bis zu tiefen Temperaturen von −110°C keine Mischungslücken

mit den Kältemitteln gefunden werden. Die Kältefließfestigkeit im U-Rohr DIN 51 568 liegt unter −80°C. Bei −92°C liegt der Stockpunkt DIN 430 3016. Er reicht aus, um unter Kältemitteldampfdruck mit geringen Mengen an flüssigem Kältemittel selbst bei Temperaturen von −110°C, flüssig zu bleiben.

Die Schmiereigenschaften dieser Öle sind ganz vorzüglich geeignet für Kältekompressoren. Die Bestimmung der Druckfestigkeit im Vierkugelapparat (DIN 51 350) zeigte die Schweißkraft von 1800 N.

Die Prüfung der Schmiereigenschaften im Almen Wieland-Test zeigten an der Belastungsgrenze eine Schweißkraft von 6500 bis 8000 N, eine Reibungskraft von 2000 bis 3000 N bei der Temperatur von 69°C.

Der Reichert-Verschleißtest bei 15 N Belastung zeigte eine Verschleißmarke von 12-14 $mm^2$ und eine spezifische Belastbarkeit von 23 $N/mm^2$.

Besonders interessant erscheint der Viskositätsindex (ISO 2909). Er liegt bei 350. Der Wassergehalt (DIN 51 777) liegt unter 30 ppm. Als weitere Vorteile sind erwähnenswert:

- Hydrolyse-, Temperatur- und Alterungsbeständigkeit
- nicht korrosives Verhalten
- entschäumende Eigenschaften
- nicht schlammbildend
- kein Quellen von Dichtungsmaterial (Ausnahme sind Silicondichtungen)

Wie dieses Beispiel der geprüften Eigenschaften oben gekennzeichneter Öle überraschend gezeigt hat, sind die genannten Schmiermittel hervorragend für den gewünschten Zweck geeignet. Sie weisen eine nur geringe Temperatur-abhängigkeit der Viskosität auf, besitzen einen sehr niedrigen Stockpunkt bei hervorragenden Schmiereigenschaften. Auch die an ein Tieftemperaturschmiermittel zu stellende Forderung der guten Löslichkeit in Kältemitteln wird von den erfindungsgemäßen Schmiermitteln erfüllt.

Die Herstellung der erfindungsgemäßen Schmiermittel erfolgt in an sich bekannter Weise durch einfache Anlagerung von Fluoralkenen an Si-H-haltige Chlorsilane, Abtrennung der gebildeten fluoralkylsubstituierten Silane, Hydrolyse von entsprechenden Mengen fluoralkylsubstituierten Silanen mit einer Mischung entsprechender Mengen (je nach gewünschten Werten für a, b, c und d) z.B. von Phenyltrichlorsilan, Trimethylmonochlorsilan und Dimethyldichlorsilan oder Phenyldichlorsilan in einem geeigneten inerten Lösungsmittel, vorzugsweise Toluol.

Anschließend erfolgt eine Äquilibrierung mit starken Äquilibrierungskatalysatoren wie z.B. Schwefelsäure, um eine enge Molekulargewichtsverteilung zu erhalten. Das Endprodukt wird neutralisiert (vorzugsweise mit Soda), im Vakuum ausgeheizt und filtriert.

Die Erfindung soll anhand des folgenden Beispiels noch näher erläutert werden.

Beispiel

Eine Mischung von 1,47 kg Trimethylmonochlorsilan, 1 kg Diphenyldichlorsilan, 16,47 kg Dimethyldichlorsilan, 1,21 kg Phenyltrichlorsilan und 6,22 kg $C_6F_{13}(CH_2)_2\,Si(CH_3)Cl_2$ (99 %ig) werden allmählich bei einer Temperatur von 35°C in 60 l Wasser unter starkem Rühren zugegeben. Die Temperatur wird durch starkes Kühlen, gegebenenfalls Eiswasser, niedrig gehalten (unter 35°C). Nach beendetem Zulauf wird 1 1/2 Stunde gerüht und zur besseren Phasentrennung 6 l Toluol zugegeben.

Man trennt die untere Phase ab, wäscht die lösungsmittelhaltige Siloxan-Phase zweimal jeweils 15 Minuten mit frischem Wasser unter Rühren. Durch Aufheizen auf 50°C entfernt man das Lösungsmittel als Destillat.

Die Siloxanphase wird mit 25 ml $H_2SO_4$ konz. versetzt und bei 50-60°C/40 mbar kondensiert. Dabei wird während 2 Stunden das anfallende Wasser abdestilliert.

Durch Zugabe von Wasser wird die $H_2SO_4$ entfernt und zweimal gewaschen. Schließlich werden 110 g ZnO zugegeben und 1 Stunde lang nachgerührt. Das ZnO sowie die mit ihm umgesetzten Säuren werden über Filterhilfsmittel unter Druck abfiltriert. Das erhaltene Öl wird bei 150° C/1 mbar angeheizt. Das Produkt wird auf eine Viskosität von 40-50 $mm^2/sec$ (bei 40°C) mit Chargen höherer oder niedrigerer Viskosität eingestellt.

Das Produkt entspricht etwa der Zusammensetzung

$$T_3\ M_5\ D^F{}_5\ D_{50}.$$

Der Brechungsindex beträgt 1,39, der Viskositätsindex ca. 350 ; ebenso entsprechen die anderen Eigenschaften den genannten Spezifikationen.

## Ansprüche

1. Schmiermittel auf Basis von Fluorsiloxanen, dadurch gekennzeichnet, daß sie aus Verbindungen der

allgemeinen Formel

$$T_a\, M_b\, D^F{}_c\, D_d$$

bestehen, wobei

- T für Phenyltrisiloxygruppen, gegebenenfalls in Gemisch mit Alkyltrisiloxygruppen,
- M für Trialkylmonosiloxygruppen und/oder Triphenylmonosiloxygruppen, insbesondere Trimethylsiloxygruppen,
- D für Dialkyl- und/oder Diphenyl- und/oder Phenylalkyldisiloxygruppen, insbesondere Dimethyldisiloxygruppen, und
- $D^F$ für Alkyl- oder aryl-disiloxygruppen, insbesondere Methyl- oder Phenyl-disiloxygruppen mit einem fluorierten Rest $C_nF_{2n+1}$–$CH_2$-$CH_2$– (n = 1 – 12) stehen und

wobei a Werte von 0-5,
b Werte von 3-7,
c Werte von 3-7 und
d Werte von 30-70

annehmen kann.

2. Schmiermittel gemäß Anspruch 1, dadurch gekennzeichnet, daß die Werte für
a etwa 3,
b etwa 5,
c etwa 5 und
d etwa 50 betragen.

## Claims

1. Lubricants based on fluorosiloxanes, characterized in that they consist of compounds corresponding to the general formula

$$T_a\, M_b\, D^F{}_c\, D_d$$

in which

- T represents phenyl trisiloxy groups, optionally in admixture with alkyl trisiloxy groups,
- M represents trialkyl monosiloxy groups and/or triphenyl monosiloxy groups, more especially trimethyl siloxy groups,
- D represents dialkyl and/or diphenyl and/or phenyl alkyl disiloxy groups, more especially dimethyl disiloxy groups, and
- $D^F$ represents alkyl or aryl disiloxy groups, more especially methyl or phenyl disiloxy groups containing a fluorinated group $C_nF_{2n+1}$–CH2-CH2– (n = 1 – 12) and

a may assume values of 0 to 5,
b may assume values of 3 to 7,
c may assume values of 3 to 7 and
d may assume values of 30 to 70

2. Lubricants as claimed in claim 1, characterized in that
a has a value of approximately 3,
b has a value of approximately 5,
c has a value of approximately 5 and
d has a value of approximately 50.

## Revendications

1. Lubrifiant à base de fluorosiloxanes, caractérisé en ce que les fluorosiloxanes sont des composés de la formule générale

$$T_a\,M_b\,D^F{}_c\,D_d$$

dans laquelle

- T représente des groupements phényltrisiloxy, éventuellement en mélange avec des groupements alkyltrisiloxy,
- M correspond à des groupements trialkylmonosiloxy et/ou à des groupements triphénylmonosiloxy, en particulier à des groupements triméthylsiloxy,
- D représente des groupements dialkyl- et/ou diphényl- et/ou phénylalkyldisiloxy, en particulier des groupements diméthyldisiloxy, et
- $D^F$ correspond à des groupements alkyl- ou aryldisiloxy, en particulier à des groupements méthyl- ou phényldisiloxy comportant un radical fluoré $C_nF_{2n+1}-CH_2-CH-$ (n = 1 – 12) et

dans laquelle a peut prendre des valeurs de 0 à 5
b peut prendre des valeurs de 3 à 7
c peut prendre des valeurs de 3 à 7 et
d peut prendre des valeurs de 30 à 70.

2. Lubrifiant selon la revendication 1, caractérisé en ce que
a est égal à environ 3,
b est égal à environ 5,
c est égal à environ 5 et
d est égal à environ 50.